# EUROPEAN PATENT APPLICATION

(11) **EP 3 543 562 A1**
(43) Date of publication of application: **25.09.2019**
(21) Application number: 19162633.2
(22) Date of filing: 13.03.2019
(51) Int. Cl.: F16H 57/04

(54) **LUBRICATION DEVICE**

(30) Priority: 19.03.2018 JP 2018051307
(71) Applicant: TOYOTA JIDOSHA KABUSHIKI KAISHA, Toyota-shi, Aichi-ken 471 8571 (JP); AISIN AW CO., LTD., Aichi-ken 444-1192 (JP)
(72) Inventor: HASHIMOTO, Hiroto, Aichi-ken, 471-8571 (JP); KIMURA, Hiroaki, Aichi-ken, 471-8571 (JP); ONO, Tomohito, Aichi-ken, 471-8571 (JP); MIYANAGA, Satoshi, Aichi-ken, 444-1192 (JP); KATO, Hiroshi, Aichi-ken, 444-1192 (JP); SUZUKI, Tomoaki, Aichi-ken, 444-1192 (JP)
(74) Representative: D Young & Co LLP

(57) **Abstract**

Provided is a lubrication device including: an input shaft MOP (51) driven by an engine (10); an output shaft MOP (52) driven by an output shaft (28); a first oil passage (71) that supplies oil, discharged from the input shaft MOP (51), to a first motor (MG1) and a second motor (MG2) provided in a hybrid vehicle (1); and a second oil passage (72) that supplies oil, discharged from the output shaft MOP (52), to the first motor (MG1) and the second motor (MG2). The output shaft MOP (52) supplies a smaller amount of oil to the first motor (MG1) during EV travel in which the hybrid vehicle (1) travels by motive power from the second motor (MG2) without using the engine (10) as a driving source, than during HV travel in which the hybrid vehicle (1) travels by motive power from the engine (10) and the second motor (MG2).

## Description

### BACKGROUND OF THE INVENTION

### 1. Field of the Invention

The present invention relates to a lubrication device for a hybrid vehicle.

### 2. Description of Related Art

Japanese Patent Application Publication No. 2010-126047 (JP 2010-126047 A) discloses a lubrication device that includes a first mechanical oil pump driven by an engine and a second mechanical oil pump driven by an output shaft, and that lubricates a stator and a shaft core of a first motor (MG1) and a front planetary gear by using the first mechanical oil pump, and lubricates the stator and the shaft core of the first motor (MG1), the front planetary gear, a stator and a shaft core of a second motor (MG2), and a rear planetary gear by using the second mechanical oil pump.

### SUMMARY OF THE INVENTION

In the lubrication device disclosed in JP 2010-126047 A, only the second mechanical oil pump is driven during EV travel, and therefore the second mechanical oil pump is required to supply oil to a larger number of destinations during the EV travel than during HV travel. This makes it necessary to increase the oil flow rate during the EV travel, for example, by employing a large-size second mechanical oil pump, which, however, can cause an increase in costs. Moreover, increasing the oil flow rate by employing a large-size second mechanical oil pump can cause the drag loss to increase accordingly.

The present invention provides a lubrication device that can secure a required oil flow rate without employing a large-size mechanical oil pump, and that can also avoid increasing the drag loss.

A first aspect of the present invention is a lubrication device for a hybrid vehicle including a first motor and a second motor. The lubrication device includes: a first mechanical oil pump driven by an engine; a second mechanical oil pump driven by an output shaft; a first oil passage provided so as to supply oil, discharged from the first mechanical oil pump, to the first motor and the second motor; and a second oil passage provided so as to supply oil, discharged from the second mechanical oil pump, to the first motor and the second motor. The lubrication device is configured such that the second mechanical oil pump supplies a smaller amount of oil to the first motor during EV travel in which the hybrid vehicle travels by motive power from the second motor without using the engine as a motive power source, than during HV travel in which the hybrid vehicle travels by motive power from at least the second motor and the engine.

According to the first aspect of the present invention, the lubrication device can increase the amount of oil supplied to the second motor by reducing the superfluous amount of oil supplied to the first motor during the EV travel during which the first motor is not driven.

In the first aspect, the lubrication device may include a valve provided in the first oil passage, on an upstream side of the first motor. The valve may be configured to be closed and shut off an oil supply to the first motor during the EV travel. The valve may be configured to be opened and permit an oil supply to the first motor during the HV travel.

According to this configuration, the lubrication device can shut off an oil supply to the first motor during the EV travel by the valve provided on the upstream side of the first motor.

In the first aspect, the first oil passage of the lubrication device may include a first branch oil passage provided so as to supply oil, discharged from the first mechanical oil pump, to a shaft core of the first motor, and a second branch oil passage provided so as to supply oil, discharged from the first mechanical oil pump, to a stator of the first motor, and the valve may be provided in the second branch oil passage, on the upstream side of the first motor.

According to this configuration, the lubrication device can shut off an oil supply to the first motor during the EV travel by the valve provided in the second branch oil passage, on the upstream side of the first motor.

In the first aspect, the valve of the lubrication device may be a solenoid-operated valve including a valve body, an electromagnetic actuator that applies a thrust force to the valve body, and a return spring that applies an urging force to the valve body in an opposite direction from the thrust force of the electromagnetic actuator. The solenoid-operated valve may be configured such that the valve body is closed during the EV travel as the electromagnetic actuator is turned on and the thrust force of the electromagnetic actuator becomes larger than the urging force of the return spring. The solenoid-operated valve may be configured such that the valve body is opened during the HV travel as the electromagnetic actuator is turned off and the thrust force of the electromagnetic actuator becomes smaller than the urging force of the return spring.

According to this configuration, the lubrication device can shut off an oil supply to the first motor during the EV travel by the solenoid-operated valve provided on the upstream side of the first motor. Moreover, by employing a solenoid-operated valve of a normally open structure that is open while the electromagnetic actuator is off, the lubrication device can reliably supply oil to the first motor even in the event of a failure of the solenoid-operated valve.

In the first aspect, the first oil passage of the lubrication device may have a third branch oil passage provided so as to supply oil, discharged from the first mechanical oil pump, to the valve. The valve may be a pressure valve including a valve body and a return spring that applies an urging force to the valve body in an opposite direction from a direction in which an oil pressure is supplied from the first mechanical oil pump. The pressure valve may be configured such that the valve body is closed during the EV travel as the force of the oil pressure supplied from the first mechanical oil pump becomes smaller than the urging force of the return spring. The pressure valve may be configured such that the valve body is opened during the HV travel as the force of the oil pressure supplied from the first mechanical oil pump becomes larger than the urging force of the return spring.

According to this configuration, the lubrication device can shut off an oil supply to the first motor during the EV travel by the pressure valve provided on the upstream side of the first motor.

In the first aspect, the urging force of the return spring in the lubrication device may be set to be equal to or smaller than the force of the oil pressure that is supplied from the first mechanical oil pump when the speed of the engine is an idling speed.

According to this configuration, the lubrication device can reliably open the pressure valve by the oil pressure from the first mechanical oil pump that is supplied through the third branch oil passage during the HV travel.

In the first aspect, the first oil passage of the lubrication device may have a fourth branch oil passage that branches off from the third branch oil passage and is connected to an oil passage between the valve and the first motor. A relief valve may be provided in the fourth branch oil passage. The relief valve may be configured to be opened by the oil pressure supplied from the first mechanical oil pump and permit an oil supply to the first motor when the valve has failed to open during the HV travel.

According to this configuration, even in the event of a failure of the pressure valve during the HV travel, the lubrication device can open the relief valve by the oil pressure supplied from the first mechanical oil pump and supply oil to the first motor through the fourth branch oil passage.

The present invention can secure a required oil flow rate without employing a large-size second mechanical oil pump, and can also avoid increasing the drag loss due to an increase in the oil flow rate, by reducing the amount of oil supplied to the first motor during the EV travel.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a skeleton diagram showing the configuration of a hybrid vehicle to which lubrication devices according to embodiments of the present invention are applied;
FIG. 2 is a diagram showing an oil circulation route during EV travel in a lubrication device according to a first embodiment of the present invention;
FIG. 3 is a diagram showing an oil circulation route during HV travel in the lubrication device according to the first embodiment;
FIG. 4 is a graph showing an oil flow ratio during the HV travel and the EV travel in the lubrication device according to the first embodiment;
FIG. 5 is a diagram showing an oil circulation route during the EV travel in a lubrication device according to a second embodiment of the present invention;
FIG. 6 is a diagram showing an oil circulation route during the HV travel in the lubrication device according to the second embodiment; and
FIG. 7 is a diagram showing an oil circulation route during the HV travel in a lubrication device according to a third embodiment of the present invention.

### DETAILED DESCRIPTION OF EMBODIMENTS

Lubrication devices according to embodiments of the present invention will be described with reference to the drawings. However, the present invention is not limited to the following embodiments. The scope of each component in the embodiments described below includes components that a person skilled in the art can use as substitutes and can easily do so, or components that are substantially the same.

### First Embodiment

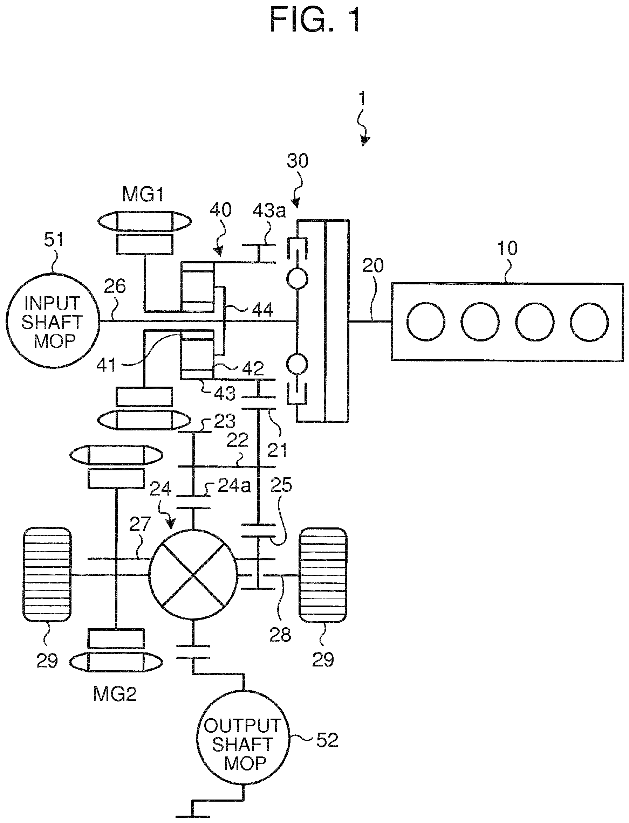

A lubrication device according to a first embodiment of the present invention will be described with reference to FIG. 1 to FIG. 4. The lubrication device according to this embodiment is installed in a hybrid vehicle (HV), a plug-in hybrid vehicle (PHV), or the like that has an engine and a motor as driving power sources.

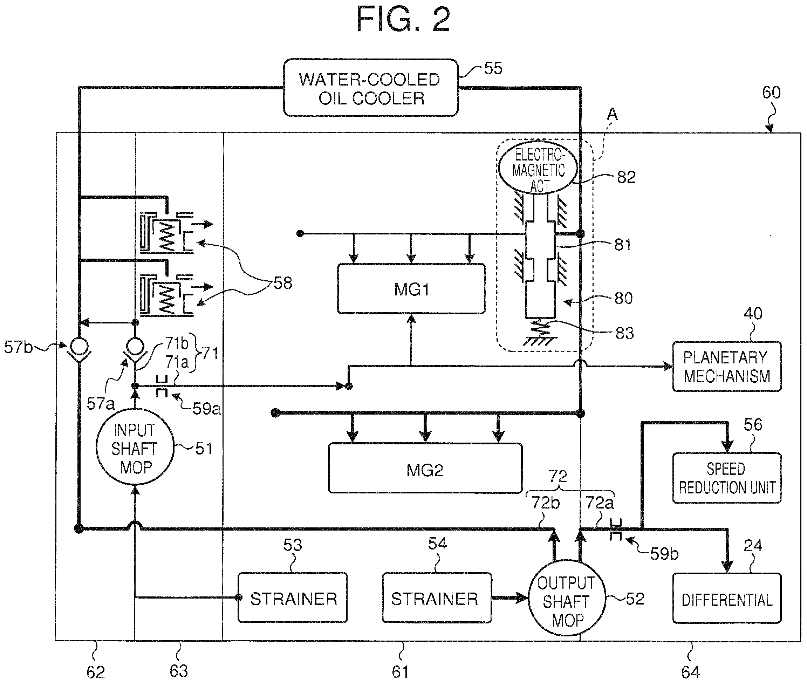

Specifically, as shown in FIG. 1 and FIG. 2, a vehicle 1 in which the lubrication device is installed mainly includes an engine 10, a crankshaft 20, a counter driven gear 21, a counter shaft 22, a counter driving gear 23, a differential 24, a differential ring gear 24a, a reduction gear 25, an input shaft 26, a rotating shaft 27, a damper 30, a planetary mechanism 40, a first motor MG1, a second motor MG2, a first mechanical oil pump (hereinafter referred to as an "input shaft MOP") 51, a second mechanical oil pump (hereinafter referred to as an "output shaft MOP") 52, a water-cooled oil cooler 55, and a speed reduction unit 56. The vehicle 1 has two travel modes: one is EV travel in which the vehicle 1 travels by motive power from the second motor MG2 without using the engine 10 as a driving source, and the other is HV travel in which the vehicle 1 travels by motive power from at least the engine 10 and the second motor MG2.

The engine 10 converts combustion energy of fuel into a rotary movement of the crankshaft 20 to output the combustion energy. The crankshaft 20 is connected to the input shaft 26 through the damper 30. The input shaft 26 is connected to a carrier 44 of the planetary mechanism 40.

The planetary mechanism 40 is a single-pinion differential mechanism, and includes a sun gear 41, a pinion gear 42, a ring gear 43, and the carrier 44. The sun gear 41 is connected to a rotor (reference sign omitted) of the first motor MG1. The pinion gear 42 is rotatably supported by the carrier 44 and meshes with each of the sun gear 41 and the ring gear 43. The ring gear 43 is connected to the counter driven gear 21 through an output gear 43a.

The counter driven gear 21 is connected to the counter driving gear 23 through the counter shaft 22. The counter driving gear 23 meshes with the differential ring gear 24a of the differential 24. The differential 24 is connected to driving wheels 29 through an output shaft 28. The counter driven gear 21 meshes with the reduction gear 25.

The reduction gear 25 is connected to the rotating shaft 27 of the second motor MG2. The rotating shaft 27 is coupled to a rotor (reference sign omitted) of the second motor MG2 and rotates integrally with the rotor of the second motor MG2.

The first motor MG1 and the second motor MG2 are commonly known motor-generators that have a motor function and a power generation function, and are electrically connected to a battery (not shown) through an inverter (not shown).

The input shaft MOP 51 is connected to the input shaft 26 that is an engine shaft, and is driven by the engine 10. The output shaft MOP 52 is connected to the output shaft 28 through the differential 24, and is driven by the output shaft 28. The output shaft 28 rotates in conjunction with the speed of the vehicle 1. The output shaft MOP 52 may be driven by a component other than the differential 24 (e.g., the counter driven gear 21, the counter driving gear 23, etc.).

The output shaft MOP 52 forcibly lubricates the differential 24 and the speed reduction unit 56. An orifice 59b is provided on a side on which the output shaft MOP 52 performs forced lubrication, i.e., the side of the differential 24 and the speed reduction unit 56. For example, the speed reduction unit 56 is composed of the counter driven gear 21, the counter shaft 22, and the counter driving gear 23.

The components of the vehicle 1 except for the water-cooled oil cooler 55 are housed in a case 60 as shown in FIG. 2. The case 60 is composed of a case main body 61 that houses the first motor MG1, the second motor MG2, and the output shaft MOP 52, a rear cover 62 that houses part of the input shaft MOP 51, a pump body 63 that houses part of the input shaft MOP 51, and a housing 64 that houses the planetary mechanism 40, the speed reduction unit 56, and the differential 24.

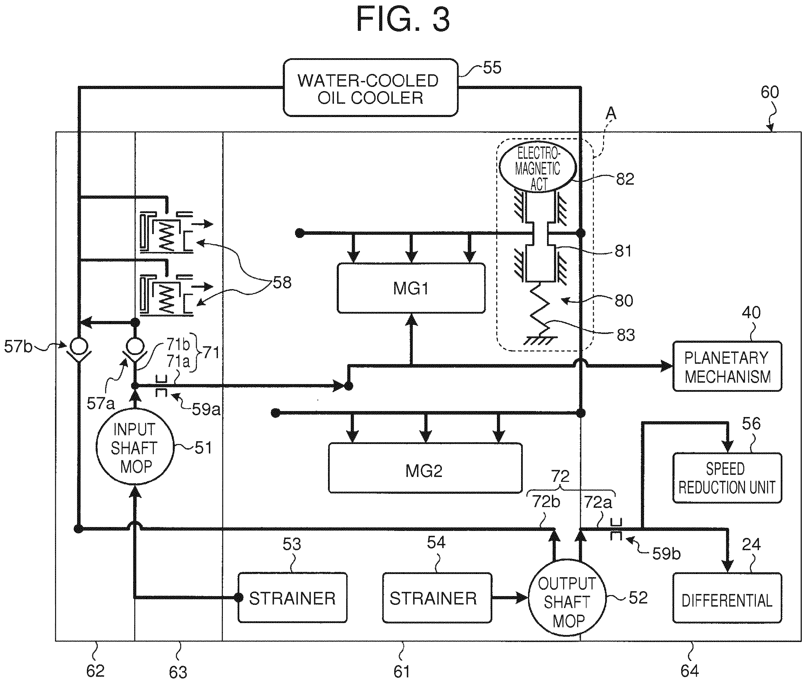

In the following, details of oil passages in the lubrication device of this embodiment will be described with reference to FIG. 2 and FIG. 3. As shown in FIG. 2, the lubrication device includes a first oil passage 71 and a second oil passage 72. In FIG. 2 and FIG. 3, the thick lines show a state where oil is supplied in the oil passage, and the thin lines show a state where oil is not supplied in the oil passage.

The first oil passage 71 is an oil passage that supplies oil, discharged from the input shaft MOP 51, to the first motor MG1, the second motor MG2, and the planetary mechanism 40. The first oil passage 71 has a first branch oil passage 71a that supplies oil, discharged from the input shaft MOP 51, to a shaft core (reference sign omitted) of the first motor MG1 and the planetary mechanism 40, and a second branch oil passage 71b that supplies oil, discharged from the input shaft MOP 51, to a stator (reference sign omitted) of the first motor MG1 and a stator (reference sign omitted) of the second motor MG2.

As shown in FIG. 3, oil in the first oil passage 71 discharged from the input shaft MOP 51 is divided and flows into the first branch oil passage 71a and the second branch oil passage 71b. The oil having flowed into the first branch oil passage 71a is supplied to the shaft core of the first motor MG1 and the planetary mechanism 40. Thus, the shaft core of the first motor MG1 is cooled by the oil and the planetary mechanism 40 is lubricated by the oil.

The oil having flowed into the second branch oil passage 71b is cooled by the water-cooled oil cooler 55 and then supplied to the stator of the first motor MG1 and the stator of the second motor MG2. Thus, the stator of the first motor MG1 and the stator of the second motor MG2 are cooled by the oil.

A strainer 53 that filters oil is connected to the input shaft MOP 51. An orifice 59a that controls the flow rate of oil discharged from the input shaft MOP 51 is provided in the first branch oil passage 71a, between the input shaft MOP 51 and the shaft core (not shown) of the first motor MG1. A check valve 57a that prevents a backflow of oil discharged from the output shaft MOP 52, and a pair of relief valves 58 that regulates the oil pressure in the first oil passage 71, are provided in the second branch oil passage 71b, between the input shaft MOP 51 and the water-cooled oil cooler 55. Instead of two relief valves 58, only one relief valve 58 may be provided in the second branch oil passage 71b.

The second oil passage 72 is an oil passage that supplies oil, discharged from the output shaft MOP 52, to the first motor MG1, the second motor MG2, the differential 24, and the speed reduction unit 56. The second oil passage 72 has a first branch oil passage 72a that supplies oil, discharged from the output shaft MOP 52, to the differential 24 and the speed reduction unit 56, and a second branch oil passage 72b that supplies oil, discharged from the output shaft MOP 52, to the stator of the first motor MG1 and the stator of the second motor MG2. A portion of the second branch oil passage 72b from the check valve 57b and a portion of the second branch oil passage 71b of the first oil passage 71 from the check valve 57a are a common portion shared by these second branch oil passages.

As shown in FIG. 2 and FIG. 3, oil in the second oil passage 72 discharged from the output shaft MOP 52 is divided and flows into the first branch oil passage 72a and the second branch oil passage 72b. The oil having flowed into the first branch oil passage 72a is supplied to the differential 24 and the speed reduction unit 56. Thus, the differential 24 and the speed reduction unit 56 are lubricated by the oil.

The oil having flowed into the second branch oil passage 72b is cooled by the water-cooled oil cooler 55 and then supplied to the stator of the first motor MG1 and the stator of the second motor MG2. Thus, the stator of the first motor MG1 and the stator of the second motor MG2 are cooled by the oil. As will be described later, the oil having flowed into the second branch oil passage 72b is not supplied to the stator of the first motor MG1 when the vehicle 1 is in the EV travel mode (see FIG. 2), and is supplied to the stator of the first motor MG1 only when the vehicle 1 is in the HV travel mode (see FIG. 3).

A strainer 54 that filters oil is connected to the output shaft MOP 52. The orifice 59b that controls the flow rate of oil discharged from the output shaft MOP 52 is provided in the first branch oil passage 72a, between the output shaft MOP 52 on one side and the differential 24 and the speed reduction unit 56 on the other side. The check valve 57b that prevents a backflow of oil discharged from the input shaft MOP 51, and the pair of relief valves 58 that regulates the oil pressure in the second oil passage 72, are provided in the second branch oil passage 72b, between the output shaft MOP 52 and the water-cooled oil cooler 55. Instead of two relief valves 58, only one relief valve 58 may be provided in the second branch oil passage 72b.

Here, the conventional lubrication device requires a large-size output shaft MOP to secure the oil flow rate of the output shaft MOP during the EV travel, which can cause an increase in costs as well as in drag loss. Therefore, the lubrication device according to this embodiment avoids employing a large-size output shaft MOP by making the amount of oil supplied to the first motor MG1 during the EV travel smaller than the amount of oil supplied to the first motor MG1 during the HV travel.

Specifically, as shown at part A of FIG. 2 and FIG. 3, the lubrication device according to this embodiment has a solenoid-operated valve 80 provided in the first oil passage 71. The solenoid-operated valve 80 is provided in the second branch oil passage 71b, on the upstream side of the stator of the first motor MG1, more specifically, between the water-cooled oil cooler 55 and the stator of the first motor MG1, at a point downstream of where the second branch oil passage 71b branches into two, one toward the first motor MG1 and the other toward the second motor MG2.

The solenoid-operated valve 80 has a valve body 81, an electromagnetic actuator 82 that applies a thrust force to the valve body 81, and a return spring 83 that applies an urging force to the valve body 81 in an opposite direction from the thrust force of the electromagnetic actuator 82. As will be described later, the solenoid-operated valve 80 has a normally open structure such that the valve body 81 is closed while a current is applied to the electromagnetic actuator 82 (the electromagnetic actuator 82 is on) and that the valve body 81 is open while no current is applied to the electromagnetic actuator 82 (the electromagnetic actuator 82 is off).

In the following, an oil circulation route in each travel mode in the lubrication device according to this embodiment will be described with reference to FIG. 2 and FIG. 3.

### During EV Travel

During the EV travel, the input shaft MOP 51 driven by the engine is stopped and only the output shaft MOP 52 driven by the output shaft is driven. As shown in FIG. 2, therefore, cooling and lubrication are performed by using the second oil passage 72. Specifically, oil having been discharged from the output shaft MOP 52 and flowed into the first branch oil passage 72a is supplied to the differential 24 and the speed reduction unit 56. Oil having been discharged from the output shaft MOP 52 and flowed into the second branch oil passage 72b is supplied to the stator of the second motor MG2.

During the EV travel, the solenoid-operated valve 80 is closed and shuts off an oil supply to the stator of the first motor MG1. Specifically, during the EV travel, the valve body 81 is closed as the electromagnetic actuator 82 is turned on and the thrust force of the electromagnetic actuator 82 becomes larger than the urging force of the return spring 83. This results in a state where no oil is supplied to the stator of the first motor MG1. Thus, the entire amount of oil having been discharged from the output shaft MOP 52 and flowed into the second branch oil passage 72b is supplied to the second motor MG2.

### During HV Travel

During the HV travel, both the input shaft MOP 51 and the output shaft MOP 52 are driven. As shown in FIG. 3, therefore, cooling and lubrication are performed by using the first oil passage 71 and the second oil passage 72. Specifically, oil having been discharged from the input shaft MOP 51 and flowed into the first branch oil passage 71a is supplied to the shaft core of the first motor MG1 and the planetary mechanism 40. Oil having been discharged from the input shaft MOP 51 and flowed into the second branch oil passage 71b is supplied to the stator of the first motor MG1 and the stator of the second motor MG2.

Oil having been discharged from the output shaft MOP 52 and flowed into the first branch oil passage 72a is supplied to the differential 24 and the speed reduction unit 56. Oil having been discharged from the output shaft MOP 52 and flowed into the second branch oil passage 72b is supplied to the stator of the first motor MG1 and the stator of the second motor MG2.

During the HV travel, the solenoid-operated valve 80 is opened and permits an oil supply to the stator of the first motor MG1. Specifically, during the HV travel, the valve body 81 is opened as the electromagnetic actuator 82 is turned off and the thrust force of the electromagnetic actuator 82 becomes smaller than the urging force of the return spring 83. As a result, oil is supplied to the stator of the first motor MG1. Thus, the oil having been discharged from the input shaft MOP 51 and the output shaft MOP 52 and flowed into the second branch oil passages 71b, 72b is supplied to both the first motor MG1 and the second motor MG2.

The lubrication device having the configuration as described above can increase the amount of oil supplied to the second motor MG2, without increasing the amount of oil discharged by the output shaft MOP 52, by reducing the superfluous amount of oil supplied to the first motor MG1 during the EV travel during which the first motor MG1 is not driven.

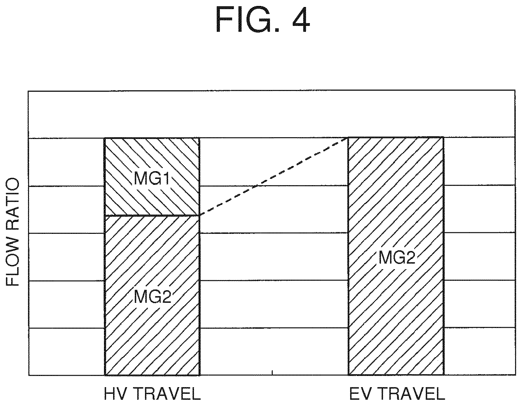

Specifically, an oil supply to the first motor MG1 during the EV travel is shut off by the solenoid-operated valve 80, so that, as shown in FIG. 4, the entire amount of oil having been discharged from the output shaft MOP 52 and flowed into the second branch oil passage 72b can be supplied to the second motor MG2. Thus, it is possible to design the output shaft MOP 52 in a minimum required size, and to secure the oil flow rate required to cool the second motor MG2 without employing a large-size output shaft MOP 52. As the need for increasing the amount of oil discharged by the output shaft MOP 52 is eliminated, it is also possible to avoid increasing the drag loss due to an increase in the oil flow rate.

The lubrication device according to this embodiment can supply the entire amount of oil having been discharged from the output shaft MOP 52 and flowed into the second branch oil passage 72b to the second motor MG2, and thus can deliver better performance in cooling the second motor MG2 than the conventional lubrication device.

The lubrication device according to this embodiment employs the solenoid-operated valve 80 of a normally open structure that always remains open while the electromagnetic actuator 82 is off as shown in FIG. 3. Thus, oil can be reliably supplied to the first motor MG1 even in the event of a failure of the solenoid-operated valve 80.

### Second Embodiment

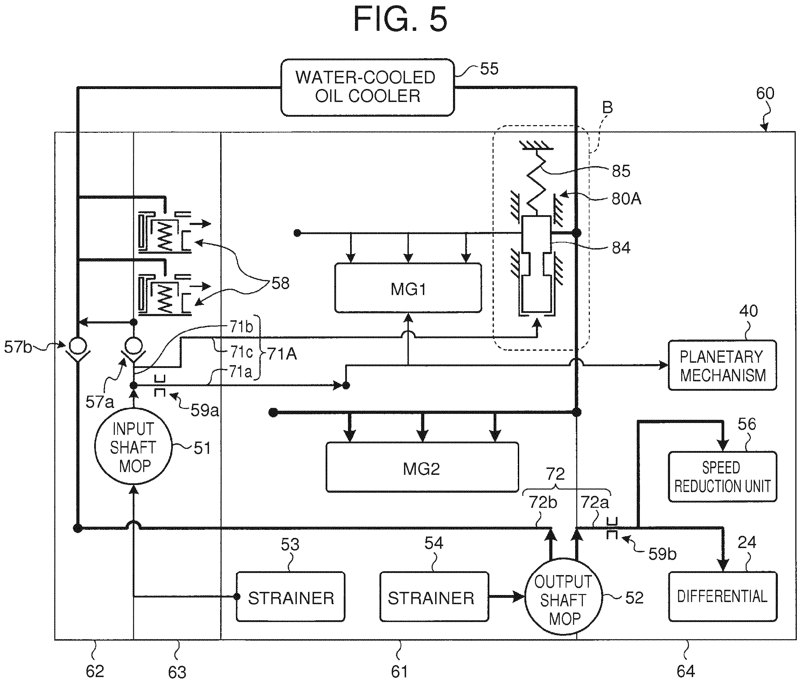

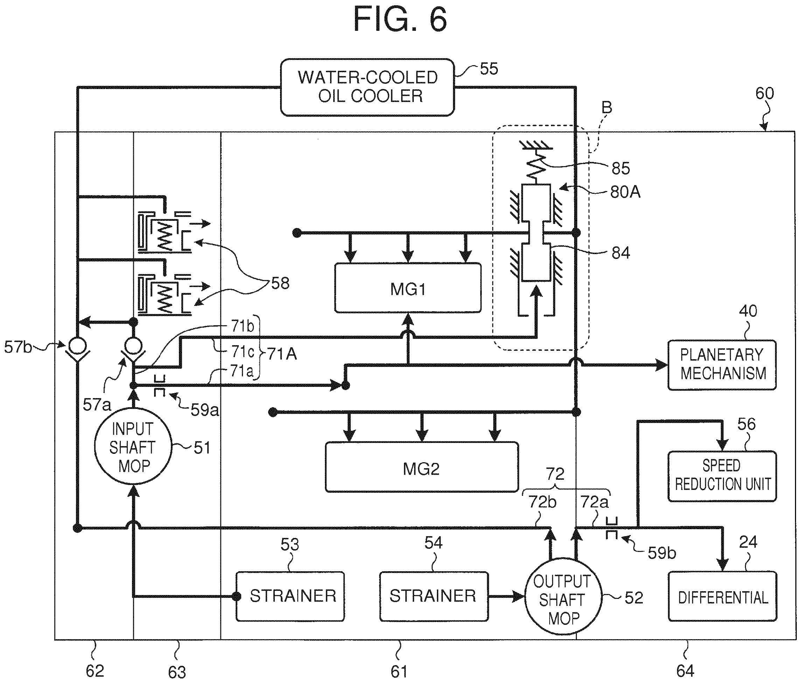

A lubrication device according to a second embodiment of the present invention will be described with reference to FIG. 5 and FIG. 6. The lubrication device according to this embodiment is the same as that of the first embodiment in that the amount of oil supplied to the first motor MG1 during the EV travel is made smaller than the amount of oil supplied to the first motor MG1 during the HV travel, but the specific means for doing so adopted in this embodiment is different from that in the first embodiment.

As shown at part B of FIG. 5 and FIG. 6, the lubrication device according to this embodiment has a pressure valve 80A, instead of the solenoid-operated valve 80 of the first embodiment (see FIG. 2), provided in the first oil passage 71. The pressure valve 80A is provided in the second branch oil passage 71b, on the upstream side of the stator of the first motor MG1, more specifically, between the water-cooled oil cooler 55 and the stator of the first motor MG1, at a point downstream of where the second branch oil passage 71b branches into two, one toward the first motor MG1 and the other toward the second motor MG2.

The pressure valve 80A has a valve body 84 and a return spring 85 that applies an urging force to the valve body 84 in an opposite direction from a direction in which an oil pressure is supplied from the input shaft MOP 51. The urging force of the return spring 85 is set to be equal to or smaller than the force of the oil pressure that is supplied from the input shaft MOP 51 when the speed of the engine 10 is an idling speed. Thus, during the HV travel during which the engine 10 is driven, the pressure valve 80A can be reliably opened by the oil pressure from the input shaft MOP 51 that is supplied through a third branch oil passage 71c to be described later.

A first oil passage 71A of the lubrication device according to this embodiment has the third branch oil passage 71c that supplies oil, discharged from the input shaft MOP 51, to the pressure valve 80A, in addition to the first branch oil passage 71a and the second branch oil passage 71b.

In the following, an oil circulation route in each travel mode in the lubrication device according to this embodiment will be described with reference to FIG. 5 and FIG. 6.

### During EV Travel

During the EV travel, the input shaft MOP 51 driven by the engine is stopped and only the output shaft MOP 52 is driven. As shown in FIG. 5, therefore, cooling and lubrication are performed by using the second oil passage 72. Specifically, oil having been discharged from the output shaft MOP 52 and flowed into the first branch oil passage 72a is supplied to the differential 24 and the speed reduction unit 56. Oil having been discharged from the output shaft MOP 52 and flowed into the second branch oil passage 72b is supplied to the stator of the second motor MG2.

During the EV travel, the pressure valve 80A is closed and shuts off an oil supply to the stator of the first motor MG1. Specifically, during the EV travel, the valve body 84 is closed as the input shaft MOP 51 is stopped and the force of the oil pressure supplied from the input shaft MOP 51 becomes smaller than the urging force of the return spring 85. This results in a state where no oil is supplied to the stator of the first motor MG1. Thus, the entire amount of oil having been discharged from the output shaft MOP 52 and flowed into the second branch oil passage 72b is supplied to the second motor MG2.

### During HV Travel

During the HV travel, both the input shaft MOP 51 and the output shaft MOP 52 are driven. As shown in FIG. 6, therefore, cooling and lubrication are performed by using the first oil passage 71A and the second oil passage 72. Specifically, oil having been discharged from the input shaft MOP 51 and flowed into the first branch oil passage 71a is supplied to the shaft core of the first motor MG1 and the planetary mechanism 40. Oil having been discharged from the input shaft MOP 51 and flowed into the second branch oil passage 71b is supplied to the stator of the first motor MG1 and the stator of the second motor MG2.

Oil having been discharged from the output shaft MOP 52 and flowed into the first branch oil passage 72a is supplied to the differential 24 and the speed reduction unit 56. Oil having been discharged from the output shaft MOP 52 and flowed into the second branch oil passage 72b is supplied to the stator of the first motor MG1 and the stator of the second motor MG2.

During the HV travel, the pressure valve 80A is opened and permits an oil supply to the stator of the first motor MG1. Specifically, during the HV travel, the valve body 84 is opened as the oil pressure from the input shaft MOP 51 is supplied to the pressure valve 80A through the third branch oil passage 71c and the force of this oil pressure supplied from the input shaft MOP 51 becomes larger than the urging force of the return spring 85. As a result, oil is supplied to the stator of the first motor MG1. Thus, the oil having been discharged from the input shaft MOP 51 and the output shaft MOP 52 and flowed into the second branch oil passages 71b, 72b is supplied to both the first motor MG1 and the second motor MG2.

The lubrication device having the configuration as described above can secure the oil flow rate required to cool the second motor MG2, without employing a large-size output shaft MOP 52, by shutting off an oil supply to the first motor MG1 during the EV travel by the pressure valve 80A.

The lubrication device according to this embodiment can achieve a cost reduction by employing the pressure valve 80A as the means for shutting off an oil supply to the first motor MG1, compared with when, for example, the solenoid-operated valve 80 is employed.

The lubrication device according to this embodiment has the configuration in which an oil pressure is taken out from the third branch oil passage 71c. Therefore, oil can be supplied to the first motor MG1 even when the check valve 57a downstream of the input shaft MOP 51 is closed, since the pressure valve 80A is opened by the oil pressure if the engine 10 is being driven (during the HV travel).

### Third Embodiment

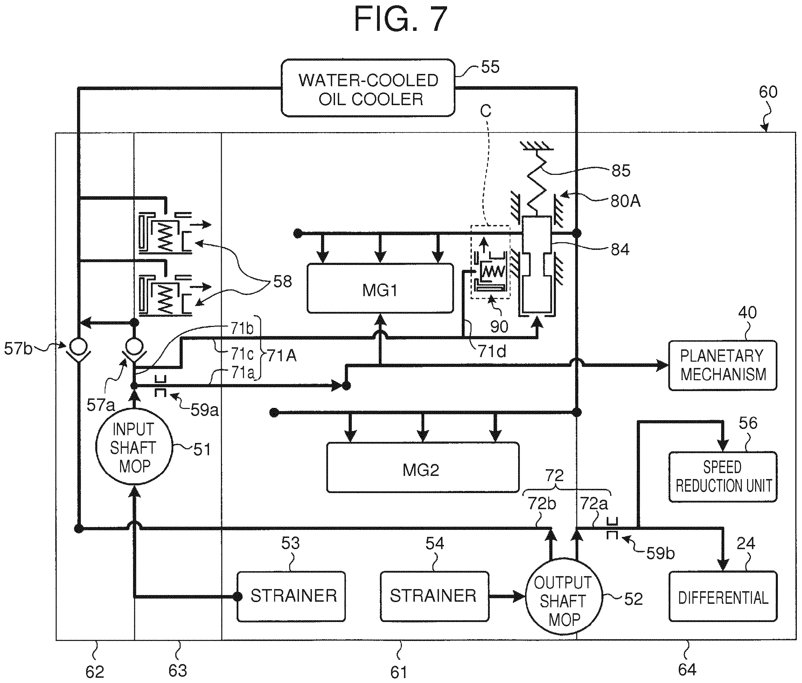

A lubrication device according to a third embodiment of the present invention will be described with reference to FIG. 7. The lubrication device according to this embodiment assumes a case where, for example, a failure of the pressure valve 80A (e.g., sticking of the valve body 84 due to a foreign object having entered the valve) has occurred in the second embodiment, and this lubrication device has a fourth branch oil passage 71d and a relief valve 90 added to the configuration of the second embodiment.

As shown at part C of FIG. 7, the lubrication device according to this embodiment has the relief valve 90 provided between the pressure valve 80A of the second embodiment and the first motor MG1. The relief valve 90 is provided in the fourth branch oil passage 71d. The fourth branch oil passage 71d branches off from the third branch oil passage 71c of the first oil passage 71A, and is connected to an oil passage between the pressure valve 80A and the first motor MG1.

Here, if the opening pressure of the relief valve 90 is higher than the opening pressure of the pair of relief valves 58, when the pressure valve 80A fails, the pair of relief valves 58 opens earlier than the relief valve 90 and the relief valve 90 becomes unable to open. Therefore, the opening pressure of the relief valve 90 is set to be equal to or lower than the opening pressure of the pair of relief valves 58.

In the following, an oil circulation route in each travel mode in the lubrication device according to this embodiment will be described with reference to FIG. 7.

### During EV Travel

The oil circulation route during the EV travel is the same as in the second embodiment (see FIG. 5). Specifically, the pressure valve 80A is closed and shuts off an oil supply to the stator of the first motor MG1, which results in a state where no oil is supplied to the stator of the first motor MG1. Thus, the entire amount of oil having been discharged from the output shaft MOP 52 and flowed into the second branch oil passage 72b is supplied to the second motor MG2.

### During HV Travel: Without Failure of Pressure Valve

When the pressure valve 80A is not failing, the oil circulation route during the HV travel is the same as in the second embodiment (see FIG. 6). Specifically, the pressure valve 80A is opened and permits an oil supply to the stator of the first motor MG1, so that oil is supplied to the stator of the first motor MG1. Thus, oil having been discharged from the input shaft MOP 51 and the output shaft MOP 52 and flowed into the second branch oil passages 71b, 72b is supplied to both the first motor MG1 and the second motor MG2.

### During HV Travel: With Failure of Pressure Valve

When the pressure valve 80A fails and the valve body 84 does not open, the oil pressure from the input shaft MOP 51 is supplied to the relief valve 90 through the fourth branch oil passage 71d. Then, as the oil pressure supplied from the input shaft MOP 51 becomes higher than the opening pressure of the relief valve 90, the relief valve 90 opens and oil is supplied to the stator of the first motor MG1. Thus, oil having been discharged from the input shaft MOP 51 and the output shaft MOP 52 and flowed into the second branch oil passages 71b, 72b is supplied to both the first motor MG1 and the second motor MG2.

The lubrication device according to this embodiment having the configuration as described above can secure the oil flow rate required to cool the second motor MG2, without employing a large-size output shaft MOP 52, by shutting off an oil supply to the first motor MG1 during the EV travel by the pressure valve 80A or the relief valve 90.

Even in the event of a failure of the pressure valve 80A during the HV travel, the lubrication device according to this embodiment can open the relief valve 90 by the oil pressure supplied from the input shaft MOP 51 and supply oil to the first motor MG1 through the fourth branch oil passage 71d.

While the lubrication devices according to the present invention have been specifically described, the gist of the invention is not limited to the above description but should be broadly interpreted based on the description of the claims. It should be understood that various modifications, improvements, etc. made based on the above description are included in the gist of the present invention.

For example, the first to third embodiments employ the valves such as the solenoid-operated valve 80, the pressure valve 80A, and the relief valve 90 as the means for making the amount of oil supplied to the first motor MG1 during the EV travel smaller than the amount of oil supplied to the first motor MG1 during the HV travel. Alternatively, the amount of oil during the EV travel may be reduced by other means than valves.

For example, instead of the valves in the first to third embodiments, an oil passage diameter switching mechanism that can switch (reduce) the diameter of the oil passage on the upstream side of the first motor MG1, or a flow rate regulation mechanism that regulates the flow rate of oil flowing through the oil passage, may be provided in the second branch oil passage 71b of the first oil passages 71, 71A to reduce the amount of oil during the EV travel.

## Claims

1. A lubrication device for a hybrid vehicle (1) including a first motor (MG1) and a second motor (MG2), the lubrication device comprising:
a first mechanical oil pump (51) driven by an engine (10);
a second mechanical oil pump (52) driven by an output shaft (28);
a first oil passage (71; 71A) provided so as to supply oil, discharged from the first mechanical oil pump (51), to the first motor (MG1) and the second motor (MG2); and
a second oil passage (72) provided so as to supply oil, discharged from the second mechanical oil pump (52), to the first motor (MG1) and the second motor (MG2), wherein
the lubrication device is configured such that the second mechanical oil pump (52) supplies a smaller amount of oil to the first motor (MG1) during EV travel in which the hybrid vehicle (1) travels by motive power from the second motor (MG2) without using the engine (10) as a motive power source, than during HV travel in which the hybrid vehicle (1) travels by motive power from at least the second motor (MG2) and the engine (10).

2. The lubrication device according to claim 1, wherein:
a valve (80; 80A) is provided in the first oil passage (71; 71A), on an upstream side of the first motor (MG1);
the valve (80; 80A) is configured to be closed and shut off an oil supply to the first motor (MG1) during the EV travel; and
the valve (80; 80A) is configured to be opened and permit an oil supply to the first motor (MG1) during the HV travel.

3. The lubrication device according to claim 2, wherein:
the first oil passage (71; 71A) includes:
a first branch oil passage (71a) provided so as to supply oil, discharged from the first mechanical oil pump (51), to a shaft core of the first motor (MG1); and
a second branch oil passage (71b) provided so as to supply oil, discharged from the first mechanical oil pump (51), to a stator of the first motor (MG1); and
the valve (80; 80A) is provided in the second branch oil passage (71b), on the upstream side of the first motor (MG1).

4. The lubrication device according to claim 2 or 3, wherein:
the valve is a solenoid-operated valve (80), the solenoid-operated valve (80) including:
a valve body (81);
an electromagnetic actuator (82) that applies a thrust force to the valve body (81); and
a return spring (83) that applies an urging force to the valve body (81) in an opposite direction from the thrust force of the electromagnetic actuator (82);
the solenoid-operated valve (80) is configured such that the valve body (81) is closed during the EV travel as the electromagnetic actuator (82) is turned on and the thrust force of the electromagnetic actuator (82) becomes larger than the urging force of the return spring (83); and
the solenoid-operated valve (80) is configured such that the valve body (81) is opened during the HV travel as the electromagnetic actuator (82) is turned off and the thrust force of the electromagnetic actuator (82) becomes smaller than the urging force of the return spring (83).

5. The lubrication device according to claim 2 or 3, wherein:
the first oil passage (71A) has a third branch oil passage (71c) provided so as to supply oil, discharged from the first mechanical oil pump (51), to the valve (80; 80A);
the valve is a pressure valve (80A), the pressure valve (80A) including:
a valve body (84); and
a return spring (85) that applies an urging force to the valve body (84) in an opposite direction from a direction in which an oil pressure is supplied from the first mechanical oil pump (51);
the pressure valve (80A) is configured such that the valve body (84) is closed during the EV travel as a force of the oil pressure supplied from the first mechanical oil pump (51) becomes smaller than the urging force of the return spring (85); and
the pressure valve (80A) is configured such that the valve body (84) is opened during the HV travel as the force of the oil pressure supplied from the first mechanical oil pump (51) becomes larger than the urging force of the return spring (85).

6. The lubrication device according to claim 5, wherein the urging force of the return spring (85) is set to be equal to or smaller than the force of the oil pressure that is supplied from the first mechanical oil pump (51) when a speed of the engine (10) is an idling speed.

7. The lubrication device according to claim 5 or 6, wherein:
the first oil passage (71A) has a fourth branch oil passage (71d) that branches off from the third branch oil passage (71c) and is connected to an oil passage between the valve (80A) and the first motor (MG1);
a relief valve (90) is provided in the fourth branch oil passage (71d); and
the relief valve (90) is configured to be opened by the oil pressure supplied from the first mechanical oil pump (51) and permit an oil supply to the first motor (MG1) when the valve (80A) has failed to open during the HV travel.
